# EUROPEAN PATENT SPECIFICATION

(11) **EP 3 351 410 B1**
(45) Date of publication and mention of the grant of the patent: **10.03.2021**
(21) Application number: 18152641.9
(22) Date of filing: 19.01.2018
(51) Int. Cl.: B60H 1/00

(54) **AIR FLOW DISTRIBUTION DEVICE**
LUFTSTROMVERTEILUNGSVORRICHTUNG
DISPOSITIF DE DISTRIBUTION DE DÉBIT D'AIR

(30) Priority: 20.01.2017 US 201715411114
(43) Date of publication of application: 25.07.2018
(73) Proprietor: Thermo King Corporation, Minneapolis, MN 55420 (US)
(72) Inventor: TRUTNOVSKY, Petr, 28121 Cervene Pecky (CZ)
(74) Representative: Haseltine Lake Kempner LLP

(56) References cited:
- GB-A- 2 340 597
- JP-A- H08 318 726
- US-A1- 2001 016 472
- US-A1- 2002 102 935

## Description

### FIELD

This disclosure relates generally to air flow management for a mass transit vehicle. More specifically, the disclosure relates to an air flow distribution device of a driver heating, ventilation, and air conditioning (HVAC) unit for a driver at a driver's seat location within the mass transit vehicle.

### BACKGROUND

Mass transit vehicles for carrying large concentration of passengers are known. Common examples of a mass transit vehicle include, for example, a bus, a trolley, a tram, a passenger train, a subway car, a ferry, etc. Mass transit vehicles typically provide a HVAC system for drivers and passengers. The controls of air flow distribution for drivers and passengers are typically separated.

As prior art there may be mentioned JP H08 318726, which discloses a rotary damper rotating around a rotary shaft provided with disk plates in which seal members are arranged. On the outside of a case, stepped parts are formed, while levers connected to the rotary shaft are arranged. The levers are provided with projection parts which are always brought into contact with the stepped parts and work as cam mechanisms. When the rotary damper is stopped, the rotary damper is displaced by means of the cam mechanisms in the direction in which the sealing members are arranged. Therefore, the seal members are brought into tight contact with the case, and as a result, a sealing property is secured. On the other hand, when the rotary damper is rotated, the rotary damper is displaced by means of the cam mechanisms in the opposite direction to that in a stopping time. Therefore, the seal members are separated from the case, and operation force for the rotary damper can be lowered.

### SUMMARY

This disclosure relates generally to air flow management for a mass transit vehicle. The invention relates to an air flow distribution device of a driver HVAC unit for a driver at a driver's location within the mass transit vehicle according to claims 1 and 9, and a method according to claim 10.

In one embodiment, the air flow distribution device includes a housing, a window air module, a head air module, a foot air module, an air inlet, an air flow distribution mechanism, and a single motor. The housing defines a space. The air flow distribution mechanism includes a rotation disk, a flap formed on the rotation disk, and a plurality of sheet plates disposed on walls of the housing. In one embodiment, the single motor is a single electric stepper motor.

In one embodiment, conditioned air flow can be directed into the space of the housing of the air flow distribution device via the air inlet of the air flow distribution device. The single motor can control an orientation of the air flow distribution mechanism. Based on the orientation of the air flow distribution mechanism, the air flow distribution mechanism can direct the conditioned air entering the space via the air inlet to exit the housing via one of the window air module, the head air module, and the foot air module of the air flow distribution device.

In one embodiment, the orientation of the air flow distribution mechanism can be controlled based on five settings: 100% of conditioned air for window, 100% of conditioned air for driver's head, 100% of conditioned air for driver's feet, about 50% conditioned air for window and about 50% conditioned air for driver's feet, and about 50% conditioned air for driver's head and about 50% conditioned air for driver's feet.

In one embodiment, the single motor can control a first orientation of the air flow distribution mechanism so that the air flow distribution mechanism can direct about 50% of the conditioned air entering the space via the air inlet to exit the housing via the head air module and about 50% of the conditioned air entering the space via the air inlet to exit the housing via the foot air module. The single motor can control a second orientation of the air flow distribution mechanism so that the air flow distribution mechanism can direct 100% of the conditioned air entering the space via the air inlet to exit the housing via the head air module. The single motor can control a third orientation of the air flow distribution mechanism so that the air flow distribution mechanism can direct 100% of the conditioned air entering the space via the air inlet to exit the housing via the foot air module. The single motor can control a fourth orientation of the air flow distribution mechanism so that the air flow distribution mechanism can direct 100% of the conditioned air entering the space via the air inlet to exit the housing via the window air module. The single motor can control a fifth orientation of the air flow distribution mechanism so that the air flow distribution mechanism can direct about 50% of the conditioned air entering the space via the air inlet to exit the housing via the window air module and about 50% of the conditioned air entering the space via the air inlet to exit the housing via the foot air module.

In such embodiment, the flap of the air flow distribution mechanism can be rotated to about 180 degrees. From one orientation to the next orientation (for example, from the first orientation to the second orientation, from the second orientation to the third orientation, etc.), or from the next orientation back to the previous orientation (for example, from the fifth orientation to the fourth orientation, from the fourth orientation to the third orientation, etc.), the rotation of the flap (and the rotation disk) of the air flow distribution mechanism can be about 30-40 degrees. In one embodiment, the first orientation can only be advanced to the second orientation and cannot be controlled back to other orientations. The fifth orientation can only be controlled back to the fourth orientation and cannot be advanced to other orientations. Except the first orientation, when an orientation of the air flow distribution mechanism is reached, the air flow distribution mechanism can be controlled, by the single motor, back to a previous orientation (for example, from the fifth orientation back to the fourth orientation, from the fourth orientation back to the third orientation, etc.).

The embodiments described herein can provide an air flow distribution device that can direct air to a head, foot and window module using a single motor.

An air flow distribution device for a driver HVAC unit in a mass transit vehicle is disclosed. The air flow distribution device includes a housing defining a space, an air inlet that directs air to enter the housing from an air blowing device, a window air module that directs air to exit the housing towards a windshield of the mass transit vehicle, a head air module that directs air to exit the housing towards an upper portion of a driver seat of the mass transit vehicle, and a foot air module that directs air to exit the housing towards a lower portion of the driver seat. The air flow distribution device further includes an air flow distribution mechanism disposed within the space that controllably directs air entering the housing via the air inlet to exit the housing via at least one of the window air module, the head air module, and the foot air module based on an orientation of the air flow distribution mechanism. The air flow distribution device also includes a single motor disposed on the housing that drives the orientation of the air flow distribution mechanism to control an air flow direction of the air entering the housing via the air inlet.

A driver HVAC unit for a mass transit vehicle is disclosed. The driver HVAC unit includes an air flow distribution device. The air flow distribution device includes a housing defining a space, an air inlet that directs air to enter the housing from an air blowing device, a window air module that directs air to exit the housing towards a windshield of the mass transit vehicle, a head air module that directs air to exit the housing towards an upper portion of a driver seat of the mass transit vehicle, and a foot air module that directs air to exit the housing towards a lower portion of the driver seat. The air flow distribution device further includes an air flow distribution mechanism disposed within the space that controllably directs air entering the housing via the air inlet to exit the housing via at least one of the window air module, the head air module, and the foot air module based on an orientation of the air flow distribution mechanism. The air flow distribution device also includes a single motor disposed on the housing that drives the orientation of the air flow distribution mechanism to control an air flow direction of the air entering the housing via the air inlet. The driver HVAC unit further includes an air blower device attached to the air flow distribution device, and the air blower device directs air into the air flow distribution device via the air inlet.

A method of distributing air within a mass transit vehicle via an air flow distribution device is disclosed. The method includes directing air into a space defined by a housing of the air flow distribution device via an air inlet of the air flow distribution device. The method further includes controlling, by a single motor, an orientation of an air flow distribution mechanism disposed within the space. The method also includes directing, by the air flow distribution mechanism, the air entering the space via the air inlet to exit the housing via one of a window air module, a head air module, and a foot air module of the air flow distribution device based on an orientation of the air flow distribution mechanism.

One advantage of the air flow distribution device is the usage of a single electric stepper motor to drive the air flow distribution mechanism to direct conditioned air to one of the window air module, the head air module, and the foot air module. Another advantage of the air flow distribution device is the usage of a flap in the air flow distribution mechanism. By minimizing the number of electric stepper motors and the flaps, the cost of the driver HVAC unit can be reduced, the control of the air distribution by the air flow distribution device can be simplified, and the reliability of the driver HVAC unit can be improved as fewer components are used.

Another advantage of the air flow distribution device is the at least five basic settings: 100% of conditioned air for window, 100% of conditioned air for driver's head, 100% of conditioned air for driver's feet, about 50% conditioned air for window and about 50% conditioned air for driver's feet, and about 50% conditioned air for driver's head and about 50% conditioned air for driver's feet. By clearly defining possible flap positions, the control of the air distribution by the air flow distribution device can be simplified. As a result, the control of the driver HVAC unit does not require complicated search for optimal setting by a driver during ride, and the safety of driving can be increased.

### BRIEF DESCRIPTION OF THE DRAWINGS

References are made to the accompanying drawings that form a part of this disclosure and which illustrate embodiments in which the systems and methods described in this specification can be practiced.
Fig. 1 is a perspective view of a mass transit vehicle, according to one embodiment.
Fig. 2 is an exterior view of a driver HVAC unit having an air flow distribution device, according to one embodiment.
Fig. 3A is an exterior view of an air flow distribution device, according to one embodiment.
Fig. 3B is an exterior view of an air flow distribution device without the foot air module, according to one embodiment.
Fig. 3C is an exterior view of an air flow distribution device, according to another embodiment.
Fig. 4 is a cross-sectional view of an air flow distribution device, according to one embodiment.
Figs. 5A-5E are schematic diagrams of different orientations of an air flow distribution mechanism within an air flow distribution device, according to some embodiments.
Fig. 6 is a flowchart of a method for distributing air within a mass transit vehicle via an air flow distribution device, according to one embodiment.

Like reference numbers represent like parts throughout.

### DETAILED DESCRIPTION

This disclosure relates generally to air flow management for a mass transit vehicle. More specifically, the disclosure relates to an air flow distribution device of a driver HVAC unit for a driver at a driver's seat location within the mass transit vehicle.

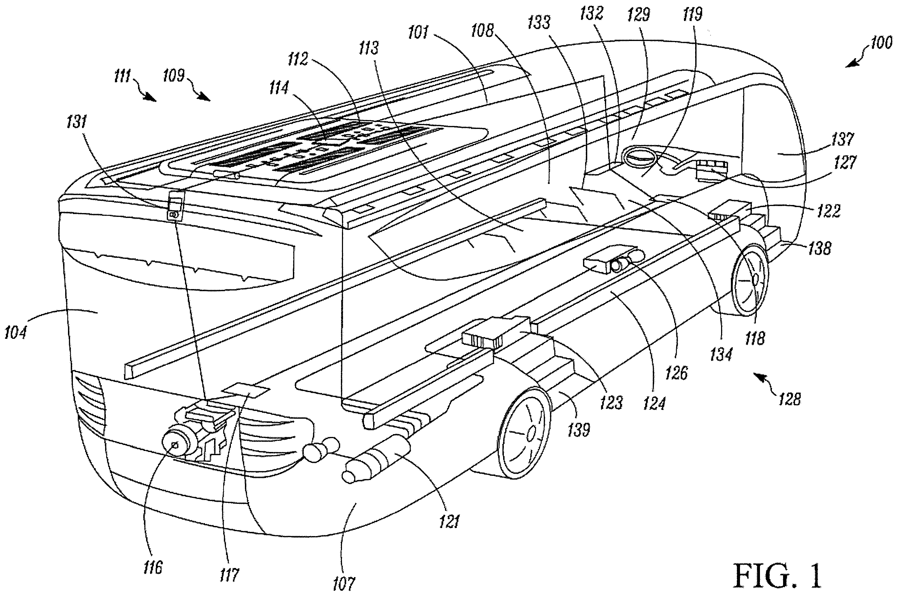

Fig. 1 is a perspective view of a mass transit vehicle 100, with a heating, ventilation, and air conditioning (HVAC) system 111, according to one embodiment. The mass transit vehicle 100 includes a roof 101, a floor (not shown), a front (not shown), a back 104, a first (left) side (not shown), a second (right) side 107, a front passenger entrance 138, and a middle passenger entrance 139. The roof 101, floor, front, back 104, left side, and right side 107 of the mass transit vehicle 100 define an internal space 108. The internal space 108 includes a driver's space 119 and a passenger's space 113. The mass transit vehicle 100 shown in Fig. 1 is a passenger bus. But it will be appreciated that the embodiments discussed herein can be used in any type of mass transit vehicle including, but not limited to, a bus, a trolley, a tram, a passenger train, a subway car, a ferry, etc.

The HVAC system 111 includes a rooftop HVAC unit 112, a compressor 116, a plurality of heaters 128, and a driver HVAC unit 127. The plurality of heaters 128 includes an auxiliary diesel fueled heater 121, entrance heaters 122 and 123, a conventional heater 124, and an under floor heater 126.

A control system 109 is disposed within the mass transit vehicle 100 to control the HVAC system 111 and other electronic equipment. The control system 109 includes a Controller Area Network (CAN) controller 114, an on-board computer 131, sub-controllers 117 and 118, and a driver's display 132. The components 114, 131, 117, 118, and 132 of the control system 109 can be electronically connected.

In Fig. 1, the rooftop HVAC unit 112 is disposed on the roof 101. The rooftop HVAC unit 112 is configured to provide conditioned air to the passenger's space 113. Conditioned air is heated and/or cooled air. The driver HVAC unit 127 is disposed near a driver's seat 133 of the mass transit vehicle 100. The driver HVAC unit 127 is configured to provide conditioned air to the driver's space 119. The driver's space 119 includes a driver's head area 129, a driver's foot area 134, a windshield area (not shown) at the front, and a side window area 137 at the left side near the front or at the right side 107 near the front.

In Fig. 1, the compressor 116 is disposed at the back 104. The compressor 116 can be in fluid communication with the rooftop HVAC unit 112 and the driver HVAC unit 127. The compressor 116 is configured to provide refrigerant to the rooftop HVAC unit 112 and the driver HVAC unit 127, as required. The entrance heaters 122 and 123 are configured to provide heated air to the front passenger entrance 138 and the middle passenger entrance 139 respectively. The entrance heater 122 is disposed near the front passenger entrance 138 and is configured to provide heated air to the front passenger entrance 138. The entrance heater 123 is disposed near the middle passenger entrance 139 and is configured to provide heated air to the middle passenger entrance 139. The conventional heater 124 is configured to provide heated air to the internal space 108 of the mass transit vehicle 100. The under floor heater 126 is configured to provide heated air to a floor portion of the internal space 108. In one embodiment, the front passenger entrance 138 can be at the left side near the front and the middle passenger entrance 139 can be close to the middle of the left side. In another embodiment, the front passenger entrance 138 can be at the right side 107 near the front and the middle passenger entrance 139 can be close to the middle of the right side 107. In another embodiment, the mass transit vehicle 100 can have only one passenger entrance and only one entrance heater.

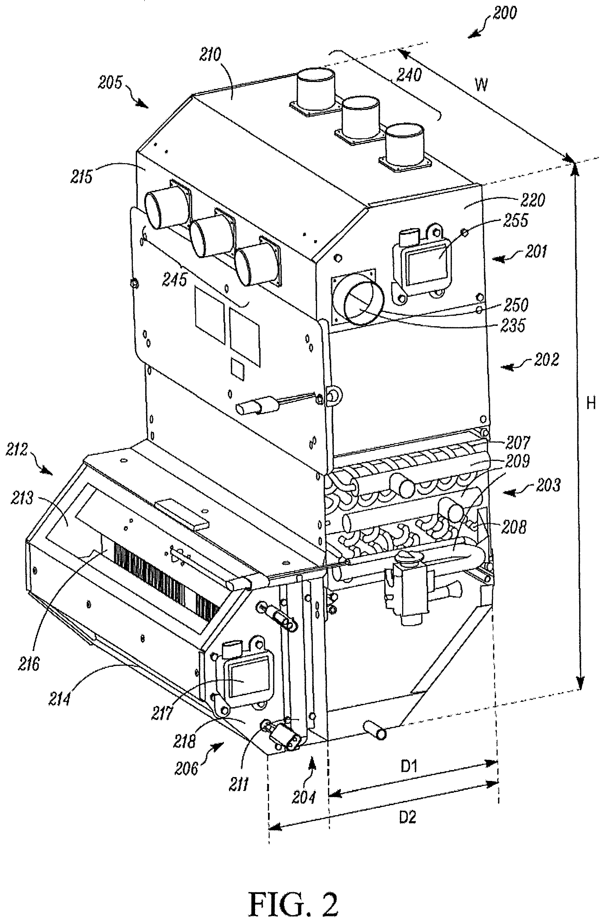

Fig. 2 is an exterior view of a driver HVAC unit 200 having an air flow distribution device 201, according to one embodiment. The driver HVAC unit 200 includes the air flow distribution device 201, an air blower device 202, an air conditioning unit 203, a filter unit 204, and a secondary air flow distribution device 206.

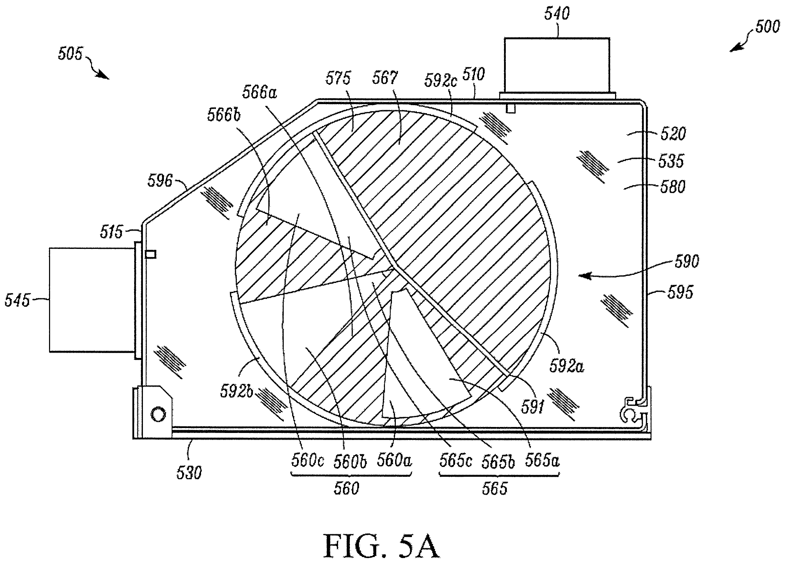

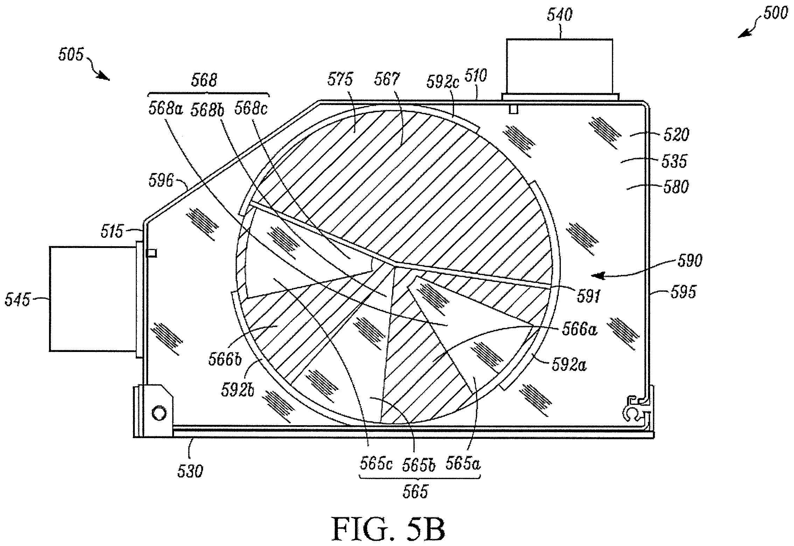

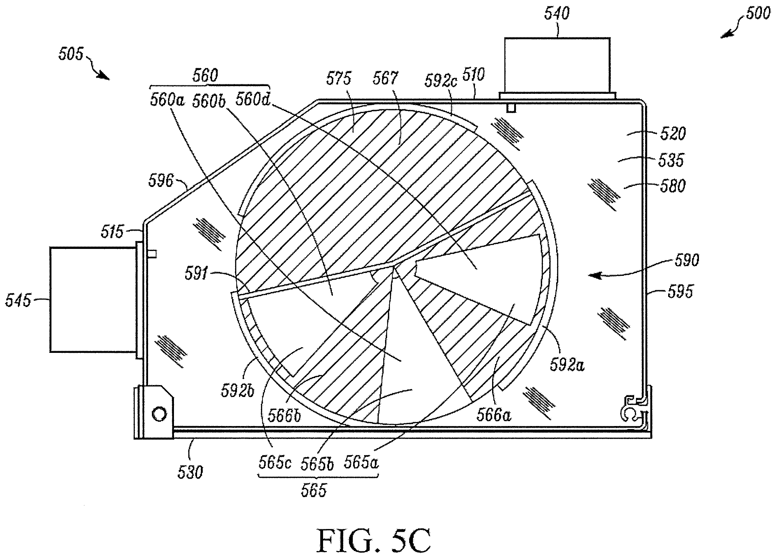

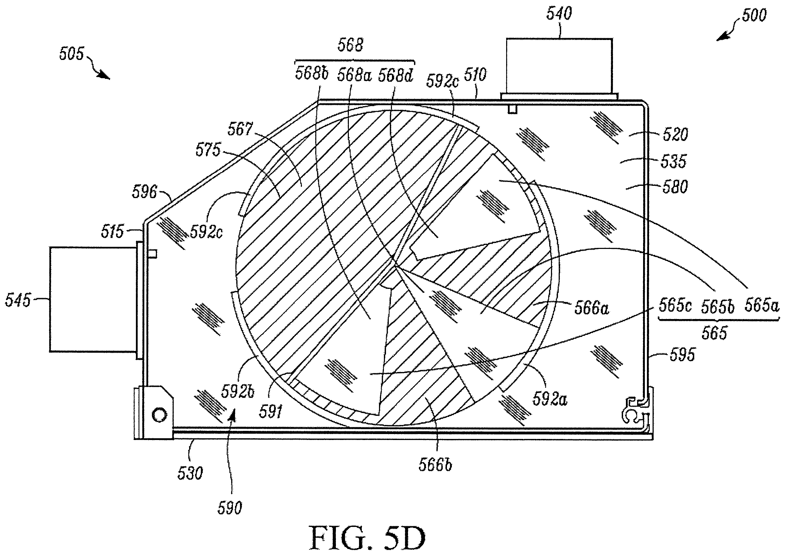

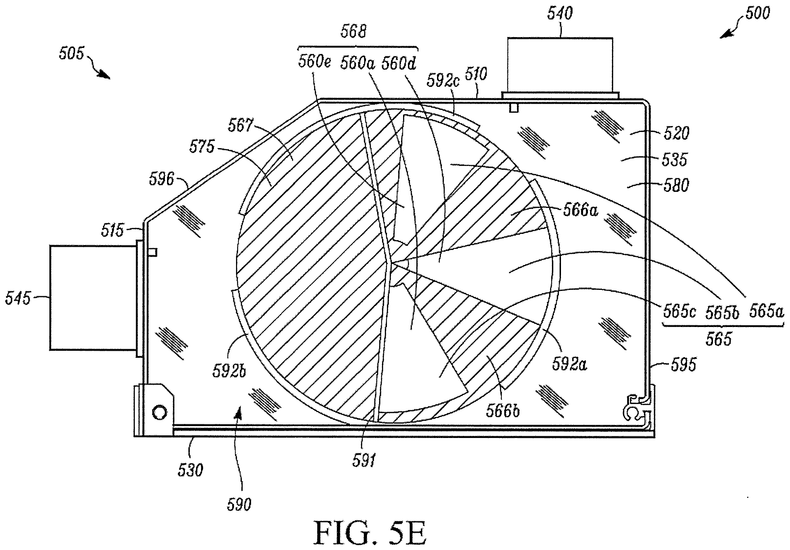

The air flow distribution device 201 can direct air from an air inlet to a head, foot and window module using a single motor. In Fig. 2, the air flow distribution device 201 includes a housing 205. The housing 205 includes a top wall 210, a front wall 215, a side wall 220, a back wall (not shown), and can have a bottom wall (not shown). The housing 205 defines a space 235. The air flow distribution device 201 also includes a window air module 240 disposed on the top wall 210, a head air module 245 disposed on the front wall 215, a foot air module 250 disposed on the side wall 220. In some embodiments, the window air module 240 can be disposed on the back wall. In some embodiments, the air flow distribution device can also include an air inlet (not shown) disposed on the bottom wall, an air flow distribution mechanism (not shown) and a single motor 255 disposed on the side wall 220. In some embodiments, the foot air module 250 can be disposed on the side wall 220 and a second side wall (not shown) that is in parallel to the side wall 220. Detailed description of the air flow distribution device can be found, for example, in the description of Fig. 5.

The air blower device 202 can direct air from air inlets of the secondary air flow distribution device 206 to pass through the filter unit 204 and the air conditioning unit 203 and then to an air inlet of the air flow distribution device 201. In Fig. 2, the air blower device 202 can include a blower (not shown). The air conditioning unit 203 can heat and/or cool air that passes through the air conditioning unit 203. The air conditioning unit 203 includes a heat coil 207, a cool coil 208, and header tubes 209. The filter unit 204 can filter air that passes through the filter unit 204. The filter unit 204 includes filter 211. The secondary air flow distribution device 206 can direct air from at least one of its air inlets to the filter unit 204. The secondary air flow distribution device 206 includes a secondary housing 212, a fresh air inlet 213, a return air inlet 214. The fresh air inlet 213 and the return air inlet 214 are disposed on the secondary housing 212. The secondary housing 212 defines a secondary space 216. The secondary air flow distribution device 206 also includes a secondary motor 217 disposed on a secondary side wall 218 of the secondary housing 212. The fresh air inlet 213 has an open state and a closed state. The return air inlet 214 has an open state and a closed state.

In Fig. 2, the air blower device 202 is disposed at a bottom of the air flow distribution device 201. The air conditioning unit 203 is disposed at a bottom of the air blower device 202. The filter unit 204 is disposed at a side of the air conditioning unit 203. The secondary air flow distribution device 206 is disposed at a side of the filter unit 204.

In Fig. 2, the shape of the driver HVAC unit 200 is an "L" shape with the lower portion mirrored. In one embodiment, the height (H) of the driver HVAC unit 200 can be about 25.39 inches (or about 61.77 inches (or about 45 millimeters)), the width (W) of the driver HVAC unit 200 can be about 18.27 inches (or about 464 millimeters), the depth (D1) of a upper portion of the driver HVAC unit 200 can be about 8.78 inches (or about 223 millimeters), and the depth (D2) of a lower portion of the driver HVAC unit 200 can be about 15.08 inches (or about 383 millimeters). In another embodiment, the shape of the driver HVAC unit can be in an "I" shape. In yet another embodiment, the shape of the driver HVAC unit can be in an "L" shape with a counterclockwise rotation of 180 degrees. In one embodiment, the filter unit 204 can include two external filters (not shown), one external filter is configured to cover the fresh air inlet 213 and the other external filter is configured to cover the return air inlet 214. In such an embodiment, the filter unit 204 may not include the filter 211. In one embodiment, the air conditioning unit 203 may not include the cool coil 208.

In operation, a user can control, via the control system 109, the secondary motor 217 of the secondary air flow distribution device 206 to open or close the fresh air inlet 213 and/or the return air inlet 214. The user can also turn on or off, via the control system 109, the air blower device 202. The user can also control, via the control system 109, the air conditioning unit 203 to selectively use the heat coil 207 and/or cool coil 208 provide heated (only heat coil 207 is in use), cooled (only cool coil is in use), or warmed air (both heat coil 207 and cool coil 208 are in use). The user can also control, via the control system 109, the single motor 255 of the air flow distribution device 201. The single motor 255 is configured to drive the orientation of the air flow distribution mechanism of the air flow distribution device 201to control an air flow direction of the air entering the housing 205 via the air inlet of the air flow distribution device 201. The air flow distribution mechanism of the air flow distribution device 201 is configured to controllably direct air entering the housing 205 via the air inlet to exit the housing 205 via one of the window air module 240, the head air module 245, and the foot air module 250 based on an orientation of the air flow distribution mechanism.

In operation, when the blower is turned on, air can be directed from the fresh air inlet 213 when the fresh air inlet 213 is open, and/or from the return air inlet 214 when the return air inlet 214 is open, into the secondary space 216. The air is directed from the secondary space 216, through the filter 211, into the air conditioning unit 203. The heated, cooled, or warmed air (depending on the controlled use of the heat coil 207 and/or the cool coil 208) is then directed from the air conditioning unit 203, by the blower, via the inlet of the air flow distribution device 201, into the housing 205. The heated, cooled, or warmed air is then directed from the housing 205, to one of the window air module 240, the head air module 245, and the foot air module 250 based on the controlled orientation of the air flow distribution mechanism.

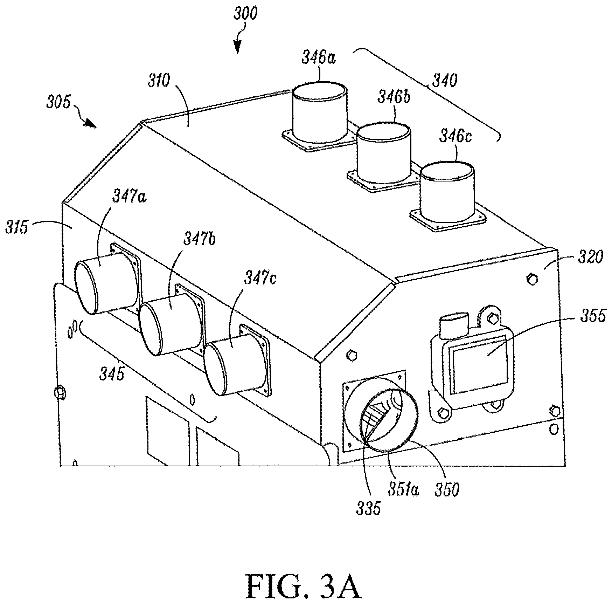

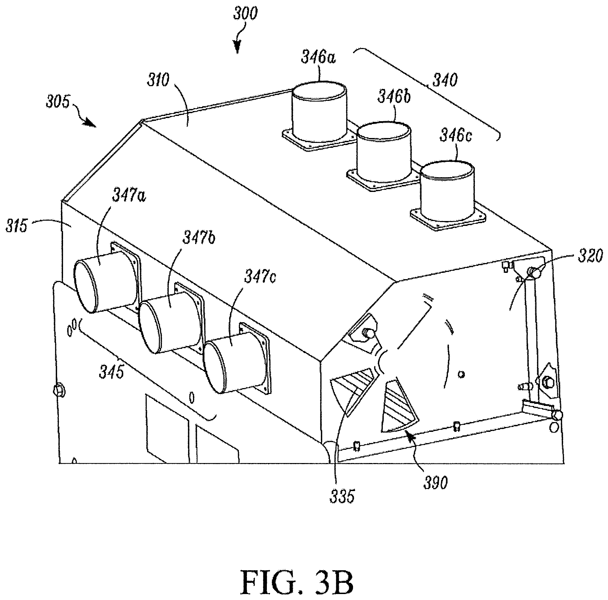

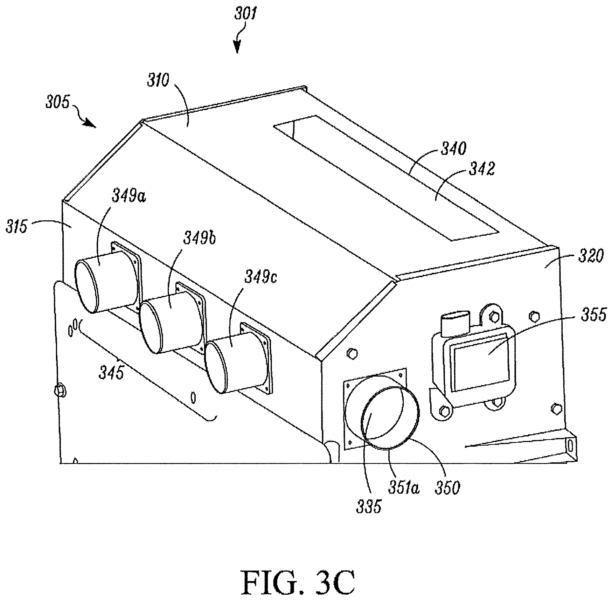

Fig. 3A is an exterior view of a portion of an air flow distribution device 300 with a foot air module 350. Fig. 3B is an exterior view of a portion of the air flow distribution device 300 without the foot air module 350 attached thereto, according to one embodiment. Fig. 3C is an exterior view of a portion of an air flow distribution device 301, according to another embodiment.

In Fig. 3A, the air flow distribution device 300 includes a housing 305. The housing 305 includes a top wall 310, a front wall 315, a side wall 320, and a bottom wall (not shown). The housing 305 defines a space 335. The air flow distribution device 300 also includes a window air module 340 disposed on the top wall 310, a head air module 345 disposed on the front wall 315, a foot air module 350 disposed on the side wall 320, an air inlet (not shown) disposed on the bottom wall, an air flow distribution mechanism (not shown) and a single motor 355 disposed on the side wall 320. In some embodiments, the foot air module 350 can be disposed on the side wall 320 and a second side wall (not shown) that is in parallel to the side wall 320.

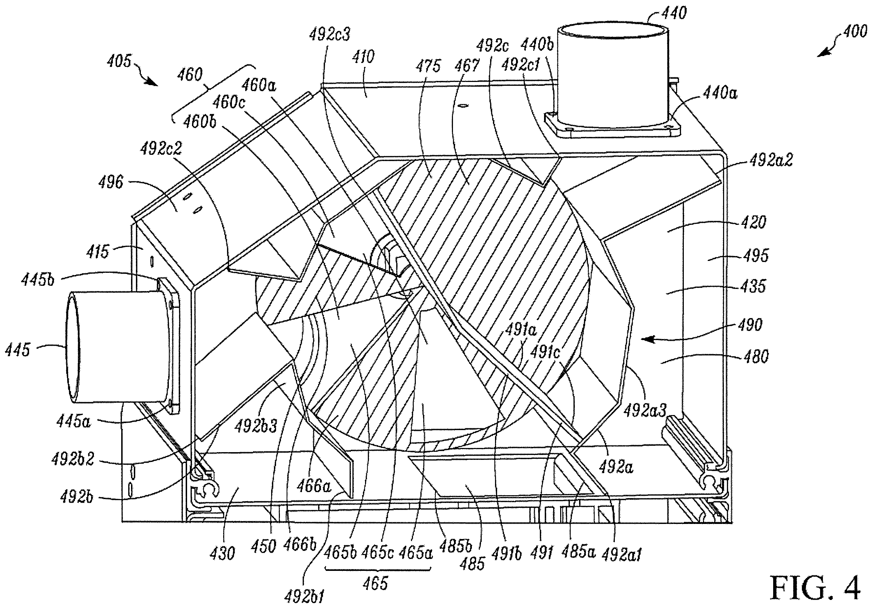

Fig. 3B is an exterior view of a portion of the air flow distribution device 300 without the foot air module 350 attached thereto. Since the foot air module was detached, an air flow distribution mechanism 390 is shown near the location of the foot air module. Detailed description of an air flow distribution mechanism can be found, for example, in the description of Fig. 4 and Figs. 5A-5E.

In Fig. 3A, the window air module 340 includes three cylinder shaped nozzles 346a, 346b, and 346c. The window nozzles 346a, 346b, and 346c are spaced from each other. The head air module 345 includes three cylinder shaped nozzles 347a, 347b, and 347c. The head nozzles 347a, 347b, and 347c are spaced from each other. The foot air module 350 includes one cylinder shaped nozzle 351a that is disposed on the side wall 320 and another cylinder shaped nozzle (not shown) that is disposed on a second side wall (not shown) in parallel to the side wall 320.

In Fig. 3C, the window air module 340 includes a rectangular shaped outlet 342. The head air module 345 includes three cylinder shaped nozzles 349a, 349b, and 349c. The head nozzles 349a, 349b, and 349c are spaced from each other. The foot air module 350 includes one cylinder shaped nozzle 351a.

It will be appreciated that in other embodiments, the window air module 340, the head air module 345, and/or the foot air module 350 can include an outlet and/or nozzles of various shapes, numbers and sizes. That is, while the outlet 342 has a rectangular shape, in other embodiments the outlet 342 can be any two or three dimensional geometric shape. The rectangle-shaped outlet 342 can have a height (not shown) so that the rectangle-shaped outlet 342 can extend outwards of the space 335 of the housing 305 in a direction perpendicular to the top wall 310.

Also, while the nozzles 346a-c, 347a-c, 349a-c, and 351a have a cylindrical shape, in other embodiments the nozzles 346a-c, 347a-c, 349a-c, and 351a can be any two or three dimensional geometric shape. The number of the outlets and nozzles can vary for each of the modules 340, 345, 350.

The size of the outlet and the nozzle can vary. For example, in the embodiment shown in Fig. 3A, the window air module 340 includes three cylinder shaped nozzles (346a, 346b, and 346c) and the diameter of each of the nozzles can be about 1.77 inches (or about 45 millimeters). In this embodiment, the head air module 345 includes three cylinder shaped nozzles (347a, 347b, and 347c) and the diameter of each of the nozzles can be about 1.77 inches (or about 45 millimeters). Also, the foot air module 350 can include two cylinder shaped nozzles, one (351a) can be on the side wall 320 and the other (not shown) can be on the second side wall (not shown), and the diameter of each of the nozzles can be about 2.95 inches (or about 75 millimeters).

In the embodiment shown in Fig. 3C, the window air module 340 includes one rectangular shaped outlet 342, and the size (length × width) of the outlet 342 can be 15.75 inches × about 3.15 inches (or about 400 millimeters × about 80 millimeters). The head air module 345 includes three cylinder shaped nozzles (349a, 349b, and 349c) and the diameter of each of the nozzles can be about 2.17 inches (or about 55 millimeters). The foot air module 350 includes two cylinder shaped nozzles, one (351a) can be on the side wall 320 and the other (not shown) can be on the second side wall (not shown), and the diameter of each of the nozzles can be about 2.95 inches (or about 75 millimeters). In one embodiment, the outlet 342 can have a height (not shown) so that the outlet 342 can extend outwards of the space 335 of the housing 305 in a direction perpendicular to the top wall 310. The height of the outlet 342 can vary.

The combination of the type (outlet, nozzle, or the like), shape (rectangle, cylinder, or the like), number of outlets or nozzles, and size of outlets or nozzles of the window air module is configured to provide sufficient conditioned air to the windshield area and/or the side window area (for example, the windshield area and/or the side window area 137 in Fig. 1), for example, to defrost the windows when the outside temperature is low. The combination of the type (outlet, nozzle, or the like), shape (rectangle, cylinder, or the like), number of outlets or nozzles, and size of outlets or nozzles of the head air module is configured to provide sufficient conditioned air to the driver's head area (for example, the driver's head area 129 in Fig. 1). The combination of the type (outlet, nozzle, or the like), shape (rectangle, cylinder, or the like), number of outlets or nozzles, and size of outlets or nozzles of the foot air module is configured to provide sufficient conditioned air to the driver's foot area (for example, the driver's foot area 134 in Fig. 1).

Fig. 4 is a cross-sectional view of an air flow distribution device 400, according to one embodiment. The air flow distribution device 400 includes a housing 405. The housing 405 includes a top wall 410, a front wall 415, a side wall 420, a bottom wall 430, a back wall 495, and a slope wall 496. The housing 405 defines a space 435. The air flow distribution device 400 also includes a window air module 440 disposed on the top wall 410, a head air module 445 disposed on the front wall 415, a foot air module 450 disposed on the side wall 420, an air inlet 485 disposed on the bottom wall 430, an air flow distribution mechanism 490 and a single motor (not shown) disposed on the side wall 420. In another embodiment, the foot air module 450 is disposed on both the side wall 420 and a second side wall (not shown) that is spaced from and in parallel to the side wall 420. The walls 410, 415, 420, 430 and 496 that form the housing 405 are merely exemplary and include more or less walls as required for design purposes. For example, in one embodiment, the housing 405 may not include the slope wall 496.

In Fig. 4, the side wall 420 includes a plurality of wall-openings 460, a plurality of wall-openings separators (not shown), and a non-opening area 480. The air flow distribution mechanism 490 includes a rotation disk 475 disposed within the space 435, the rotation disk 475 has a plurality of disk-openings 465, a plurality of disk-opening separators 466a and 466b, and a disk-closed area 467. It is to be appreciated that the surface shading on the rotation disk 475 in Fig. 4 does not represent the color and/or the material of the rotation disk 475. The rotation disk 475 can be of any suitable material such as metal and/or plastic. The rotation disk 475 can be of any suitable color. The surface shading on the rotation disk 475 is to differentiate the rotation disk 475 from other elements of the air flow distribution device 400. In one embodiment, the plurality of disk-openings 465 includes three disk openings 465a, 465b, and 465c. Each disk opening 465a, 465b, or 465c has a shape of a sector of a circle, or a shape of a slice of pizza. In one embodiment, all three disk openings i.e. 465a, 465b, and 465c have the same shape. In other embodiments, each of the openings and/or separators can have a different size and/or shape based on design requirements. In one embodiment, the rotation disk 475 includes two disk-opening separators 466a and 466b. The three disk openings 465a, 465b, and 465c are separated from each other by the two disk-opening separators 466a and 466b. The two disk-opening separators 466a and 466b have the same shape as the shape of the three disk openings 465a, 465b, and 465c. In one embodiment, the side wall 420 includes five wall openings (i.e. 460a, 460b, 460c, and two wall openings not shown). Each wall opening (for example, 460a, 460b, and 460c) has the same shape as the shape of the disk openings465a, 465b, and 465c. In one embodiment, the side wall 420 includes four wall-openings separators (not shown). The five wall openings (460a, 460b, 460c, and two other wall openings) are separated from each other by the four wall-opening separators. The four wall-opening separators have the same shape as the shape of the five wall openings (460a, 460b, 460c, and two other wall openings). In other embodiments, the separators and the openings can have different shapes and sizes.

In Fig. 4, the air flow distribution mechanism 490 also includes a flap 491 that is formed and fixed on the disk-closed area 467 of the rotation disk 475. In one embodiment, the air flow distribution mechanism 490 includes a single flap 491. In one embodiment, the flap 491 is integrally formed on the disk-closed area 467 of the rotation disk 475. The rotation disk 475 is disposed in parallel to and next to the side wall 420. The flap 491 is disposed perpendicular to the side wall 420. The width of the flap 491 extends from the rotation disk 475 to the second side wall, i.e., a first edge 491a of the flap 491 is disposed on the rotation disk 475 and a second edge 491b of the flap 491 is disposed on the second side wall. When the rotation disk 475 is rotated, the flap 491 is rotated with the rotation disk 475. A first end 491c and a second end (not shown) of the flap are at the circumference of the rotation disk 475 viewed from the direction perpendicular to the rotation disk 475. The first end 491c of the flap 491, the center of the rotation disk 475, and the second end of the flap forms an obtuse angle viewed from the direction perpendicular to the rotation disk 475.

In Fig. 4, the air flow distribution mechanism 490 further includes a plurality of sheet plates 492a, 492b, and 492c. The plurality of sheet plates 492a, 492b, and 492c extends in a direction perpendicular to the side wall 420 and is disposed on both the side wall 420 and the second side wall. A first edge of the sheet plate 492a is disposed on the side wall 420 and a second edge of the sheet plate 492a is disposed on the second side wall. A first edge of the sheet plate 492b is disposed on the side wall 420 and a second edge of the sheet plate 492b is disposed on the second side wall. A first edge of the sheet plate 492c is disposed on the side wall 420 and a second edge of the sheet plate 492c is disposed on the second side wall.

In Fig. 4, the sheet plate 492a has a zig-zag shape in a direction of the length of the sheet plate 492a. A first end 492al of the sheet plate 492a is disposed on the bottom wall 430 at a first end 485a of the air inlet 485 that is closer to the back wall 495. A second end 492a2 of the sheet plate 492a is disposed on the back wall 495. In another embodiment, the second end 492a2 of the sheet plate 492a is disposed on the top wall 410 at a first end 440a of the window air module 440 that is closer to the back wall 495. A middle portion 492a3 of the zig-zagged sheet plate 492a closely reflects a portion of the circumference of the rotation disk 475 viewed from the direction perpendicular to the rotation disk 475.

The sheet plate 492b has a zig-zag shape in a direction of the length of the sheet plate 492b. A first end 492b1 of the sheet plate 492b is disposed on the bottom wall 430 at a second end 485b of the air inlet 485 that is closer to the front wall 415. A second end 492b2 of the sheet plate 492b is disposed on the front wall 415 at a first end 445a of the head air module 445 that is closer to the bottom wall 430. In another embodiment, the second end 492b2 of the sheet plate 492b is disposed on the bottom wall 430. A middle portion 492b3 of the zig-zagged sheet plate 492b closely reflects a portion of the circumference of the rotation disk 475 viewed from the direction perpendicular to the rotation disk 475.

The sheet plate 492c has a zig-zag shape in a direction of the length of the sheet plate 492c. A first end 492c1 of the sheet plate 492c is disposed on the top wall 410 at a second end 440b of the window air module 440 that is closer to the front wall 415. A second end 492c2 of the sheet plate 492c is disposed on the slope wall 496. In another embodiment, the second end 492c2 of the sheet plate 492c is disposed on the front wall 415 at a second end 445b of the head air module 445 that is closer to the top wall 410. A middle portion 492c3 of the zig-zagged sheet plate 492c closely reflects a portion of the circumference of the rotation disk 475 viewed from the direction perpendicular to the rotation disk 475.

In operation, a user can control the single motor (not shown) of the air flow distribution device 400. The single motor is configured to drive the orientation of the air flow distribution mechanism 490 of the air flow distribution device 400 to control an air flow direction of the air entering the housing 405 via the air inlet 485 of the air flow distribution device 400. The air flow distribution mechanism 490 of the air flow distribution device 400 is configured to controllably direct air entering the housing 405 via the air inlet 485 to exit the housing 405 via one of the window air module 440, the head air module 445, and the foot air module 450 based on an orientation of the air flow distribution mechanism 490.

In operation, a user can control the single motor, for example, via a driver panel potentiometer knob, to drive the orientation of the air flow distribution mechanism 490. For example, a user can use the driver panel potentiometer knob to choose a desired orientation, and each orientation corresponds to a different resistance of the potentiometer. In this embodiment, the plurality of disk-openings 465 includes three disk openings 465a, 465b, and 465c. The rotation disk 475 includes two disk-opening separators 466a and 466b, and the side wall 420 includes five wall openings (i.e. 460a, 460b, 460c, and two wall openings not shown) and four wall-openings separators (not shown).

Fig. 4 shows one orientation of the air flow distribution mechanism 490. The rotation disk 475 can be rotated at a position so that each of the three disk openings 465a, 465b, and 465c overlaps a wall opening (460a, 460b, and 460c) respectively. The remaining two wall openings overlap the disk-opening separators, or overlap the disk-closed area 467 as shown in Fig. 4. In such orientation, conditioned air entering the housing 405 via the air inlet 485 can be directed, via the overlapped three disk openings (465a, 465b, and 465c) and three wall openings (460a, 460b, and 460c), to exit the housing 405 through the foot air module 450. In Fig. 4, the flap 491, the sheet plate 492a, and the sheet plate 492c form a barrier that blocks conditioned air so that the conditioned air cannot exit the housing 405 through the window air module 440. The flap 491, the sheet plate 492a, the sheet plate 492b, and the sheet plate 492c form a passage so that the conditioned air can be directed to exit the housing 405 through the head air module 445. In such orientation, a first portion of the conditioned air entering the housing 405 via the air inlet 485 can be directed to exit the housing 405 through the head air module 445. A second portion of the conditioned air entering the housing 405 via the air inlet 485 can be directed to exit the housing 405 through the foot air module 450. The conditioned air is blocked so that it cannot exit the housing 405 through the window air module 440. In one embodiment, the first portion of the conditioned air is about 50% of the conditioned air, and the second portion of the conditioned air is about 50% of the conditioned air. The amount of the first portion and the second portion of the conditioned air can vary.

Figs. 5A-5E illustrate schematic diagrams of different orientations of an air flow distribution mechanism 590 within an air flow distribution device 500, according to some embodiments.

Figs. 5A-5E show a housing 505, a top wall 510, a front wall 515, a side wall 520, a bottom wall 530, a back wall 595, a slope wall 596, a space 535, a window air module 540, a head air module 545, a foot air module (not shown), an air inlet (not shown), an air flow distribution mechanism 590, a single motor (not shown), a plurality of wall-openings 560 (560a, 560b, 560c, 560d, and 560e), a plurality of wall-openings separators 568 (568a, 568b, 568c, and 568d), a non-opening area 580, a rotation disk 575, a plurality of disk-openings 565 (565a, 565b, and 565c), a plurality of disk-opening separators (566a and 566b), a disk-closed area 567, a flap 591 a sheet plate 592a, a sheet plate 592b, and a sheet plate 592c. The structure and function of these elements are similar to the respective elements shown in Fig. 4. It is to be appreciated that the surface shading on the rotation disk 575 in Figs. 5A-5E does not represent the color and/or the material of the rotation disk 575. The rotation disk 575 can be of any suitable material such as metal and/or plastic. The rotation disk 575 can be of any suitable color. The surface shading on the rotation disk 575 is to differentiate the rotation disk 575 from other elements of the air flow distribution device 500.

It is also to be appreciated that the surface shading on the side wall 520 in Figs. 5A-5E does not represent the color and/or the material of the side wall 520. The side wall 520 can be of any suitable material such as metal and/or plastic. The side wall 520 can be of any suitable color. The surface shading on the side wall 520 is to differentiate the side wall 520 from other elements of the air flow distribution device 500.

In operation, a user can control the single motor (not shown) of the air flow distribution device 500. The single motor is configured to drive the orientation of the air flow distribution mechanism 590 of the air flow distribution device 500 to control an air flow direction of the air entering the housing 505 via the air inlet of the air flow distribution device 500. The air flow distribution mechanism 590 of the air flow distribution device 500 is configured to controllably direct air entering the housing 505 via the air inlet to exit the housing 505 via one of the window air module 540, the head air module 545, and the foot air module based on an orientation of the air flow distribution mechanism 590.

In operation, a user can control the single motor to drive the orientation of the air flow distribution mechanism 590. In one embodiment, the plurality of disk-openings 565 includes three disk openings 565a, 565b, and 565c. The rotation disk 575 includes two disk-opening separators 566a and 566b, and the side wall 520 includes five wall openings (560a, 560b, 560c, 560d, and 560e) and four wall-openings separators (568a, 568b, 568c, and 568d).

Fig. 5A shows one orientation of the air flow distribution mechanism 590. In operation, the rotation disk 575 can be rotated at a position so that each of the three disk openings 565a, 565b, and 565c overlaps a wall opening (560a, 560b, and 560c) respectively. The remaining two wall openings 560d and 560e overlap the disk-opening separators, or overlap the disk-closed area 567 as shown in Fig. 5A. In such orientation, conditioned air entering the housing 505 via the air inlet can be directed, via the overlapped three disk openings (565a, 565b, and 565c) and three wall openings (560a, 560b, and 560c), to exit the housing 505 through the foot air module. In Fig. 5A, the flap 591, the sheet plate 592a, and the sheet plate 592c form a barrier that blocks conditioned air so that the conditioned air cannot exit the housing 505 through the window air module 540. The flap 591, the sheet plate 592a, the sheet plate 592b, and the sheet plate 592c form a passage so that the conditioned air can be directed to exit the housing 505 through the head air module 545. In such orientation, a first portion of the conditioned air entering the housing 505 via the air inlet can be directed to exit the housing 505 through the head air module 545. A second portion of the conditioned air entering the housing 505 via the air inlet can be directed to exit the housing 505 through the foot air module. The conditioned air is blocked so that it cannot exit the housing 505 through the window air module 540. In one embodiment, the first portion of the conditioned air is can be about 50% of the conditioned air, and the second portion of the conditioned air can be about 50% of the conditioned air. It will be appreciated that in other embodiments the amount of the first portion and the second portion of the conditioned air can vary based on design and/or user requirements.

Fig. 5B shows another orientation of the air flow distribution mechanism 590. In operation, the rotation disk 575 can be rotated at a position so that each of the three disk openings 565a, 565b, and 565c overlaps a wall-openings separator (568a, 568b, and 568c) respectively. As shown in Fig. 5B, the wall openings (560a and 560b) overlap the disk-opening separators 566a and 566b respectively, and the wall openings (560c, 560d and 560e) overlap the disk-closed area 567. In such orientation, the disk-opening separators 566a and 566b, the disk-closed area 567, wall-openings separators (568a, 568b, and 568c), and the non-opening area 580 form a barrier that blocks conditioned air so that the conditioned air cannot exit the housing 505 through the foot air module. At another embodiment, the disk openings can overlap the non-opening area 580. In Fig. 5B, the flap 591, the sheet plate 592a, and the sheet plate 592c form a barrier that blocks conditioned air so that the conditioned air cannot exit the housing 505 through the window air module 540. The flap 591, the sheet plate 592a, the sheet plate 592b, and the sheet plate 592c form a passage so that the conditioned air can be directed to exit the housing 505 through the head air module 545. In such orientation, the conditioned air entering the housing 505 via the air inlet can be directed to exit the housing 505 through the head air module 545. The conditioned air is blocked so that it cannot exit the housing 505 through the window air module 540 or the foot air module. In one embodiment, 100% conditioned air entering the housing 505 via the air inlet can be directed to exit the housing 505 through the head air module 545.

Fig. 5C shows yet another orientation of the air flow distribution mechanism 590. In operation, the rotation disk 575 can be rotated at a position so that each of the three disk openings 565a, 565b, and 565c overlaps a wall opening (560a, 560b, and 560d) respectively. The remaining two wall openings 560c and 560e overlap the disk-opening separators, or overlap the disk-closed area 567 as shown in Fig. 5C. In such orientation, conditioned air entering the housing 505 via the air inlet can be directed, via the overlapped three disk openings (565a, 565b, and 565c) and three wall openings (560a, 560b, and 560d), to exit the housing 505 through the foot air module. In Fig. 5C, the flap 591, the sheet plate 592a, and the sheet plate 592b form a barrier that blocks conditioned air so that the conditioned air cannot exit the housing 505 through the window air module 540 or the head air module 545. In such orientation, the conditioned air entering the housing 505 via the air inlet can be directed to exit the housing 505 through the foot air module. The conditioned air is blocked so that it cannot exit the housing 505 through the window air module 540 or the head air module 545. In one embodiment, 100% conditioned air entering the housing 505 via the air inlet can be directed to exit the housing 505 through the foot air module.

Fig. 5D shows yet another orientation of the air flow distribution mechanism 590. In operation, the rotation disk 575 can be rotated at a position so that each of the three disk openings 565a, 565b, and 565c overlaps a wall-openings separator (568d, 568a, and 568b) respectively. As shown in Fig. 5D, the wall openings (560a and 560d) overlap the disk-opening separators 566b and 566a respectively, and the wall openings (560e, 560c and 560b) overlap the disk-closed area 567. In such orientation, the disk-opening separators 566a and 566b, the disk-closed area 567, wall-openings separators (568a, 568b, and 568c), and the non-opening area 580 form a barrier that blocks conditioned air so that the conditioned air cannot exit the housing 505 through the foot air module. At another embodiment, the disk openings can overlap the non-opening area 580. In Fig. 5D, the flap 591, the sheet plate 592b, and the sheet plate 592c form a barrier that blocks conditioned air so that the conditioned air cannot exit the housing 505 through the head air module 545. The flap 591, the sheet plate 592a, the sheet plate 592b, and the sheet plate 592c form a passage so that the conditioned air can be directed to exit the housing 505 through the window air module 540. In such orientation, the conditioned air entering the housing 505 via the air inlet can be directed to exit the housing 505 through the window air module 540. The conditioned air is blocked so that it cannot exit the housing 505 through the head air module 545 or the foot air module. In one embodiment, 100% conditioned air entering the housing 505 via the air inlet can be directed to exit the housing 505 through the window air module 540.

Fig. 5E shows yet another orientation of the air flow distribution mechanism 590. In operation, the rotation disk 575 can be rotated at a position so that each of the three disk openings 565a, 565b, and 565c overlaps a wall opening (560a, 560d, and 560e) respectively. The remaining two wall openings 560b and 560c overlap the disk-opening separators, or overlap the disk-closed area 567 as shown in Fig. 5E. In such orientation, conditioned air entering the housing 505 via the air inlet can be directed, via the overlapped three disk openings (565a, 565b, and 565c) and three wall openings (560a, 560d, and 560e), to exit the housing 505 through the foot air module. In Fig. 5E, the flap 591, the sheet plate 592b, and the sheet plate 592c form a barrier that blocks conditioned air so that the conditioned air cannot exit the housing 505 through the head air module 545. The flap 591, the sheet plate 592a, the sheet plate 592b, and the sheet plate 592c form a passage so that the conditioned air can be directed to exit the housing 505 through the window air module 540. In such orientation, a first portion of the conditioned air entering the housing 505 via the air inlet can be directed to exit the housing 505 through the window air module 540. A second portion of the conditioned air entering the housing 505 via the air inlet can be directed to exit the housing 505 through the foot air module. The conditioned air is blocked so that it cannot exit the housing 505 through the head air module 545. In one embodiment, the first portion of the conditioned air can be about 50% of the conditioned air, and the second portion of the conditioned air can be about 50% of the conditioned air. It will be appreciated that in other embodiments the amount of the first portion and the second portion of the conditioned air can vary based on design and/or user requirements.

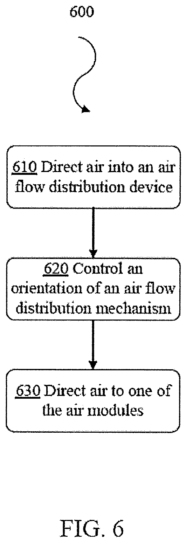

Fig. 6 is a flowchart of a method 600 for distributing air within a mass transit vehicle via an air flow distribution device (for example, the air flow distribution device 201 in Fig. 2) in a driver HVAC unit (for example, the driver HVAC unit 200 in Fig. 2), according to one embodiment. The method 600 for distributing air includes 610 directing conditioned air into an air flow distribution device via an air inlet (for example, the air inlet 485 in Fig. 4), 620 controlling an orientation of an air flow distribution mechanism (for example, the air flow distribution mechanism 490 in Fig. 4), and 630 directing the conditioned air into one of the air modules (for example, one of the window air module 440, the head air module 445, and the foot air module 450 in Fig. 4). Specific examples of the method 600 are reflected in the embodiments discussed above with respect to Figs. 1-5E.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, indicate the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts, without departing from the scope of the present disclosure. The word "embodiment" as used within this specification may, but does not necessarily, refer to the same embodiment. This specification and the embodiments described are examples only. Other and further embodiments may be devised without departing from the basic scope thereof, with the scope of the invention being defined by the claims that follow.

## Claims

1. An air flow distribution device (201, 300, 301, 400, 500) for a driver heating, ventilation and air conditioning unit (HVAC) unit (200) in a mass transit vehicle (100), the air flow distribution device comprising:
a housing (205, 305, 405, 505) defining a space (235, 335, 435, 535);
an air inlet (485) that directs air to enter the housing from an air blowing device;
a window air module (240, 340, 440, 540) that directs air to exit the housing towards a windshield of the mass transit vehicle;
a head air module (245, 345, 445, 545) that directs air to exit the housing towards an upper portion of a driver seat of the mass transit vehicle;
a foot air module (250, 350, 450) that directs air to exit the housing towards a lower portion of the driver seat;
an air flow distribution mechanism (390, 490, 590) disposed within the space, **characterised in that** the air flow distribution mechanism (390, 490, 590) includes a rotation disk (475), a flap (491) formed on the rotation disk, and a plurality of sheet plates (492 a,b,c) disposed on walls of the housing; and
a single motor (255, 355) disposed on the housing that drives the orientation of the rotation disk;
wherein, based on the orientation of the rotation disk, the flap and two of the plurality of sheet plates form a barrier that prevents air which enters the housing via the air inlet from exiting the housing through at least one of the window air module, the head air module, and the foot air module such that the air flow distribution mechanism controllably directs air to exit the housing via the or each other of the window air module, the head air module, and the foot air module.

2. The air flow distribution device (201, 300, 301, 400, 500) according to claim 1, wherein at least one of the window air module (240, 340, 440, 540), the head air module (245, 345, 445, 545), and the foot air module (250, 350, 450) includes a nozzle (346a-c, 347a-c, 349a-c, 351a) that directs air to exit the housing (205, 305, 405, 505).

3. The air flow distribution device (201, 300, 301, 400, 500) according to claim 1, wherein at least one of the window air module (240, 340, 440, 540), the head air module (245, 345, 445, 545), and the foot air module (250, 350, 450) includes a plurality of nozzles (346a-c, 347a-c, 349a-c, 351a) that direct air to exit the housing (205, 305, 405, 505).

4. The air flow distribution device (201, 300, 301, 400, 500) according to claim 1, wherein at least one of the window air module (240, 340, 440, 540), the head air module (245, 345, 445, 545), and the foot air module (250, 350, 450) includes an outlet (342) that directs air to exit the housing (205, 305, 405, 505).

5. The air flow distribution device (201, 300, 301, 400, 500) according to any one of the claims 1-4, wherein the rotation disk has a disk-opening area (465a-c, 565a-c) and a disk-closed area (467, 567),
wherein the single motor (255, 355) rotates the rotation disk to a plurality of orientations, each of the plurality of orientations directing air via the disk-opening area and the disk-closed area to exit the housing through a different one of the window air module (240, 340, 440, 540), the head air module (245, 345, 445, 545) and the foot air module (250, 350, 450).

6. The air flow distribution device according to claim 5, wherein the rotation disk includes a first orientation in which air is directed to exit the housing via the window air module, a second orientation in which air is directed to exit the housing via the head air module, and a third orientation in which air is directed to exit the housing via the foot air module.

7. The air flow distribution device according to claim 6, wherein the rotation disk includes a fourth orientation in which a first portion of air is directed to exit the housing via the window air module and a second portion of air is directed to exit the housing via the foot air module, and a fifth orientation in which the first portion of air is directed to exit the housing via the head air module and the second portion of air is directed to exit the housing via the foot air module.

8. The air flow distribution device according to claim 5, wherein the rotation disk includes a first orientation in which air is directed to exit the housing only via the window air module, a second orientation in which air is directed to exit the housing only via the head air module, and a third orientation in which air is directed to exit the housing only via the foot air module.

9. A driver HVAC unit for a mass transit vehicle (100), the driver HVAC unit comprising:
the air flow distribution device (201, 300, 301, 400, 500) of claim 1; and
the air blower device attached to the air flow distribution device, the air blower device directs air into the air flow distribution device via the air inlet (485).

10. A method of distributing air within a mass transit vehicle (100) via an air flow distribution device (201, 300, 301, 400, 500) according to claim 1, which includes a rotation disk (475), a flap (491) formed on the rotation disk, and a plurality of sheet plates (492 a,b,c) disposed on walls of the housing, the method comprising:
directing air into a space (235, 335, 435, 535) defined by a housing (205, 305, 405, 505) of the air flow distribution device via an air inlet (485) of the air flow distribution device;
controlling, by a single motor (255, 355), an orientation of the rotation disk, wherein, based on the orientation of the rotation disk, the flap and two of the plurality of sheet plates form a barrier that prevents air which enters the housing via the air inlet from exiting the housing through at least one of a window air module, a head air module, and a foot air module of the air flow distribution device; and
directing, by the air flow distribution mechanism (390, 490, 590), the air entering the space via the air inlet to exit the housing via the or each other of the window air module (240, 340, 440, 540), the head air module (245, 345, 445, 545), and the foot air module (250, 350, 450).

11. The method according to claim 10, comprising:
directing, by the air flow distribution mechanism, a first portion of the air entering the space via the air inlet to exit the housing via the window air module and a second portion of the air entering the space via the air inlet to exit the housing via the foot air module based on an orientation of the air flow distribution mechanism.

12. The method according to claim 10, comprising:
directing, by the air flow distribution mechanism, a first portion of the air entering the space via the air inlet to exit the housing via the head air module and a second portion of the air entering the space via the air inlet to exit the housing via the foot air module based on an orientation of the air flow distribution mechanism.

## Patentansprüche

1. Luftstromverteilungsvorrichtung (201, 300, 301, 400, 500) für eine Heizungs-, Lüftungs- und Klimatisierungseinheit (HLK-Einheit) (200) für einen Fahrer in einem Massentransportfahrzeug (100), wobei die Luftstromverteilungsvorrichtung folgende Elemente umfasst:
ein Gehäuse (205, 305, 405, 505), das einen Raum (235, 335, 435, 535) definiert;
einen Lufteinlass (485), der Luft von einer Luftblasvorrichtung zum Eintreten in das Gehäuse leitet; ein Fensterluftmodul (240, 340, 440, 540), das Luft zum Austreten aus dem Gehäuse in Richtung einer Windschutzscheibe des Massentransportfahrzeugs leitet;
ein Kopfluftmodul (245, 345, 445, 545), das Luft zum Austreten aus dem Gehäuse in Richtung eines oberen Abschnitts eines Fahrersitzes des Massentransportfahrzeugs leitet;
ein Fußluftmodul (250, 350, 450), das Luft zum Austreten aus dem Gehäuse in Richtung eines unteren Abschnitts des Fahrersitzes leitet;
einen Luftstromverteilungsmechanismus (390, 490, 590), der im Raum eingerichtet ist, **dadurch gekennzeichnet, dass** der Luftstromverteilungsmechanismus (390, 490, 590) eine Drehscheibe (475), eine an der Drehscheibe ausgebildete Klappe (491) und eine Vielzahl von Blechplatten (492 a, b, c), die an Wänden des Gehäuses eingerichtet sind, beinhaltet; und
einen einzelnen Motor (255, 355), der am Gehäuse eingerichtet ist und die Ausrichtung der Drehscheibe antreibt;
wobei, auf der Grundlage der Ausrichtung der Drehscheibe, die Klappe und zwei der Vielzahl von Blechplatten eine Barriere bilden, die verhindert, dass Luft, die über den Lufteinlass in das Gehäuse eintritt, das Gehäuse durch mindestens eines vom Fensterluftmodul, dem Kopfluftmodul und dem Fußluftmodul verlässt, derart, dass der Luftstromverteilungsmechanismus Luft steuerbar so lenkt, dass sie das Gehäuse über das oder jedes andere vom Fensterluftmodul, dem Kopfluftmodul und dem Fußluftmodul verlässt.

2. Luftstromverteilungsvorrichtung (201, 300, 301, 400, 500) nach Anspruch 1, wobei mindestens eines vom Fensterluftmodul (240, 340, 440, 540), dem Kopfluftmodul (245, 345, 445, 545) und dem Fußluftmodul (250, 350, 450) eine Düse (346a-c, 347a-c, 349a-c, 351a) beinhaltet, die Luft zum Austreten aus dem Gehäuse (205, 305, 405, 505) leitet.

3. Luftstromverteilungsvorrichtung (201, 300, 301, 400, 500) nach Anspruch 1, wobei mindestens eines vom Fensterluftmodul (240, 340, 440, 540), dem Kopfluftmodul (245, 345, 445, 545) und dem Fußluftmodul (250, 350, 450) eine Vielzahl von Düsen (346a-c, 347a-c, 349a-c, 351a) beinhaltet, die Luft zum Austreten aus dem Gehäuse (205, 305, 405, 505) leiten.

4. Luftstromverteilungsvorrichtung (201, 300, 301, 400, 500) nach Anspruch 1, wobei mindestens eines vom Fensterluftmodul (240, 340, 440, 540), dem Kopfluftmodul (245, 345, 445, 545) und dem Fußluftmodul (250, 350, 450) einen Auslass (342) beinhaltet, der Luft zum Austreten aus dem Gehäuse (205, 305, 405, 505) leitet.

5. Luftstromverteilungsvorrichtung (201, 300, 301, 400, 500) nach einem der Ansprüche 1 bis 4, wobei die Drehscheibe einen Scheibenöffnungsbereich (465a-c, 565a-c) und einen Scheibenschließbereich (467, 567) aufweist, wobei der einzelne Motor (255, 355) die Drehscheibe in eine Vielzahl von Ausrichtungen dreht, wobei jede der Vielzahl von Ausrichtungen Luft über den Scheibenöffnungsbereich und den Scheibenschließbereich zum Austreten aus dem Gehäuse durch ein anderes vom Fensterluftmodul (240, 340, 440, 540), dem Kopfluftmodul (245, 345, 445, 545) und dem Fußluftmodul (250, 350, 450) leitet.

6. Luftstromverteilungsvorrichtung nach Anspruch 5, wobei die Drehscheibe eine erste Ausrichtung, in der Luft zum Austreten aus dem Gehäuse über das Fensterluftmodul geleitet wird, eine zweite Ausrichtung, in der Luft zum Austreten aus dem Gehäuse über das Kopfluftmodul geleitet wird, und eine dritte Ausrichtung, in der Luft zum Austreten aus dem Gehäuse über das Fußluftmodul geleitet wird, beinhaltet.

7. Luftstromverteilungsvorrichtung nach Anspruch 6, wobei die Drehscheibe eine vierte Ausrichtung, bei der ein erster Anteil von Luft zum Austreten aus dem Gehäuse über das Fensterluftmodul und ein zweiter Anteil von Luft zum Austreten aus dem Gehäuse über das Fußluftmodul geleitet wird, und eine fünfte Ausrichtung, bei der der erste Anteil von Luft zum Austreten aus dem Gehäuse über das Kopfluftmodul und der zweite Anteil von Luft zum Austreten aus dem Gehäuse über das Fußluftmodul geleitet wird, beinhaltet.

8. Luftstromverteilungsvorrichtung nach Anspruch 5, wobei die Drehscheibe eine erste Ausrichtung, in der Luft zum Austreten aus dem Gehäuse nur über das Fensterluftmodul geleitet wird, eine zweite Ausrichtung, in der Luft zum Austreten aus dem Gehäuse nur über das Kopfluftmodul geleitet wird, und eine dritte Ausrichtung, in der Luft zum Austreten aus dem Gehäuse nur über das Fußluftmodul geleitet wird, beinhaltet.

9. Fahrer-HLK-Einheit für ein Massentransportfahrzeug (100), wobei die Fahrer-HLK-Einheit umfasst:
die Luftstromverteilungsvorrichtung (201, 300, 301, 400, 500) nach Anspruch 1; und
die Luftgebläsevorrichtung, die an der Luftstromverteilungsvorrichtung angebracht ist, wobei die Luftgebläsevorrichtung Luft über den Lufteinlass (485) in die Luftstromverteilungsvorrichtung leitet.

10. Verfahren zum Verteilen von Luft innerhalb eines Massentransportfahrzeugs (100) über eine Luftstromverteilungsvorrichtung (201, 300, 301, 400, 500) nach Anspruch 1, die eine Drehscheibe (475), eine an der Drehscheibe ausgebildete Klappe (491) und eine Vielzahl von an Wänden des Gehäuses eingerichteten Blechplatten (492 a, b, c) beinhaltet, wobei das Verfahren umfasst:
Leiten von Luft in einen Raum (235, 335, 435, 535), der durch ein Gehäuse (205, 305, 405, 505) der Luftstromverteilungsvorrichtung definiert ist, über einen Lufteinlass (485) der Luftstromverteilungsvorrichtung;
Steuern, durch einen einzelnen Motor (255, 355), einer Ausrichtung der Drehscheibe, wobei die Klappe und zwei der Vielzahl von Blechplatten auf der Grundlage der Ausrichtung der Drehscheibe eine Barriere bilden, die verhindert, dass Luft, die über den Lufteinlass in das Gehäuse eintritt, das Gehäuse durch mindestens eines von einem Fensterluftmodul, einem Kopfluftmodul und einem Fußluftmodul der Luftstromverteilungsvorrichtung verlässt; und
Leiten, durch den Luftstromverteilungsmechanismus (390, 490, 590), der über den Lufteinlass in den Raum eintretenden Luft zum Austreten aus dem Gehäuse über das oder jedes andere vom Fensterluftmodul (240, 340, 440, 540), dem Kopfluftmodul (245, 345, 445, 545) und dem Fußluftmodul (250, 350, 450).

11. Verfahren nach Anspruch 10, umfassend:
Leiten, durch den Luftstromverteilungsmechanismus, eines ersten Anteils der über den Lufteinlass in den Raum eintretenden Luft zum Austreten aus dem Gehäuse über das Fensterluftmodul und eines zweiten Anteils der über den Lufteinlass in den Raum eintretenden Luft zum Austreten aus dem Gehäuse über das Fußluftmodul, auf der Grundlage einer Ausrichtung des Luftstromverteilungsmechanismus.

12. Verfahren nach Anspruch 10, umfassend:
Leiten, durch den Luftstromverteilungsmechanismus, eines ersten Anteils der über den Lufteinlass in den Raum eintretenden Luft zum Austreten aus dem Gehäuse über das Kopfluftmodul und eines zweiten Anteils der über den Lufteinlass in den Raum eintretenden Luft zum Austreten aus dem Gehäuse über das Fußluftmodul, auf der Grundlage einer Ausrichtung des Luftstromverteilungsmechanismus.

## Revendications

1. Dispositif (201, 300, 301, 400, 500) de distribution de débit d'air destiné à une unité (200) de chauffage, de ventilation et de climatisation (unité d'HVAC) de conducteur dans un véhicule (100) de transport en commun, le dispositif de distribution de débit d'air comportant :
un boîtier (205, 305, 405, 505) définissant un espace (235, 335, 435, 535),
une entrée (485) d'air qui dirige de l'air de façon à entrer dans le boîtier en provenance d'un dispositif de soufflage d'air ;
un module (240, 340, 440, 540) d'air de vitre qui dirige de l'air de façon à quitter le boîtier vers un pare-brise du véhicule de transport en commun ;
un module (245, 345, 445, 545) d'air de tête qui dirige de l'air de façon à quitter le boîtier vers une partie supérieure d'un siège de conducteur du véhicule de transport en commun ;
un module (250, 350, 450) d'air de pied qui dirige de l'air de façon à quitter le boîtier vers une partie inférieure du siège de conducteur ;
un mécanisme (390, 490, 590) de distribution de débit d'air disposé à l'intérieur de l'espace, **caractérisé en ce que** le mécanisme (390, 490, 590) de distribution de débit d'air comprend un disque (475) de rotation, un volet (491) formé sur le disque de rotation, et une pluralité de plaques (492 a, b, c) en feuilles disposées sur des parois du boîtier ; et
un moteur unique (255, 355) disposé sur le boîtier, qui entraîne l'orientation du disque de rotation ;
le volet et deux plaques de la pluralité de plaques en feuilles formant, suivant l'orientation du disque de rotation, une barrière qui empêche de l'air entrant dans le boîtier via l'entrée d'air de quitter le boîtier à travers au moins un module parmi le module d'air de vitre, le module d'air de tête, et le module d'air de pied de telle façon que le mécanisme de distribution de débit d'air dirige de manière commandable de l'air de façon à quitter le boîtier via l'autre ou chaque autre module parmi le module d'air de vitre, le module d'air de tête, et le module d'air de pied.

2. Dispositif (201, 300, 301, 400, 500) de distribution de débit d'air selon la revendication 1, au moins un module parmi le module (240, 340, 440, 540) d'air de vitre, le module (245, 345, 445, 545) d'air de tête, et le module (250, 350, 450) d'air de pied comprenant une buse (346a-c, 347a-c, 349a-c, 351a) qui dirige de l'air de façon à quitter le boîtier (205, 305, 405, 505).

3. Dispositif (201, 300, 301, 400, 500) de distribution de débit d'air selon la revendication 1, au moins un module parmi le module (240, 340, 440, 540) d'air de vitre, le module (245, 345, 445, 545) d'air de tête, et le module (250, 350, 450) d'air de pied comprenant une pluralité de buses (346a-c, 347a-c, 349a-c, 351a) qui dirigent de l'air de façon à quitter le boîtier (205, 305, 405, 505).

4. Dispositif (201, 300, 301, 400, 500) de distribution de débit d'air selon la revendication 1, au moins un module parmi le module (240, 340, 440, 540) d'air de vitre, le module (245, 345, 445, 545) d'air de tête, et le module (250, 350, 450) d'air de pied comprenant une sortie (342) qui dirige de l'air de façon à quitter le boîtier (205, 305, 405, 505).

5. Dispositif (201, 300, 301, 400, 500) de distribution de débit d'air selon l'une quelconque des revendications 1 à 4, le disque de rotation présentant une zone (465a-c, 565a-c) d'ouverture de disque et une zone (467, 567) de disque fermé,
le moteur unique (255, 355) faisant tourner le disque de rotation jusqu'à une pluralité d'orientations, chaque orientation de la pluralité d'orientations dirigeant de l'air via la zone d'ouverture de disque et la zone de disque fermé de façon à quitter le boîtier à travers un module différent parmi le module (240, 340, 440, 540) d'air de vitre, le module (245, 345, 445, 545) d'air de tête et le module (250, 350, 450) d'air de pied.

6. Dispositif de distribution de débit d'air selon la revendication 5, le disque de rotation comprenant une première orientation dans laquelle de l'air est dirigé de façon à quitter le boîtier via le module d'air de vitre, une deuxième orientation dans laquelle de l'air est dirigé de façon à quitter le boîtier via le module d'air de tête, et une troisième orientation dans laquelle de l'air est dirigé de façon à quitter le boîtier via le module d'air de pied.

7. Dispositif de distribution de débit d'air selon la revendication 6, le disque de rotation comprenant une quatrième orientation dans laquelle une première partie de l'air est dirigée de façon à quitter le boîtier via le module d'air de vitre et une deuxième partie de l'air est dirigée de façon à quitter le boîtier via le module d'air de pied, et une cinquième orientation dans laquelle la première partie de l'air est dirigée de façon à quitter le boîtier via le module d'air de tête et la deuxième partie de l'air est dirigée de façon à quitter le boîtier via le module d'air de pied.

8. Dispositif de distribution de débit d'air selon la revendication 5, le disque de rotation comprenant une première orientation dans laquelle de l'air est dirigé de façon à quitter le boîtier uniquement via le module d'air de vitre, une deuxième orientation dans laquelle de l'air est dirigé de façon à quitter le boîtier uniquement via le module d'air de tête, et une troisième orientation dans laquelle de l'air est dirigé de façon à quitter le boîtier uniquement via le module d'air de pied.

9. Unité d'HVAC de conducteur destinée à un véhicule (100) de transport en commun, l'unité d'HVAC de conducteur comportant :
le dispositif (201, 300, 301, 400, 500) de distribution de débit d'air selon la revendication 1 ; et
le dispositif de soufflage d'air raccordé au dispositif de distribution de débit d'air, le dispositif de soufflage d'air dirigeant de l'air dans le dispositif de distribution de débit d'air via l'entrée (485) d'air.

10. Procédé de distribution d'air à l'intérieur d'un véhicule (100) de transport en commun via un dispositif (201, 300, 301, 400, 500) de distribution de débit d'air selon la revendication 1, qui comprend un disque (475) de rotation, un volet (491) formé sur le disque de rotation, et une pluralité de plaques (492 a, b, c) en feuilles disposées sur des parois du boîtier, le procédé comportant les étapes consistant à :
diriger de l'air dans un espace (235, 335, 435, 535) défini par un boîtier (205, 305, 405, 505) du dispositif de distribution de débit d'air via une entrée (485) d'air du dispositif de distribution de débit d'air ;
commander, par un moteur unique (255, 355), une orientation du disque de rotation, le volet et deux plaques de la pluralité de plaques en feuilles formant, suivant l'orientation du disque de rotation, une barrière qui empêche de l'air entrant dans le boîtier via l'entrée d'air de quitter le boîtier à travers au moins un module parmi un module d'air de vitre, un module d'air de tête, et un module d'air de pied du dispositif de distribution de débit d'air ; et
diriger, par le mécanisme (390, 490, 590) de distribution de débit d'air, l'air entrant dans l'espace via l'entrée d'air de façon à quitter le boîtier via l'autre ou chaque autre module parmi le module (240, 340, 440, 540) d'air de vitre, le module (245, 345, 445, 545) d'air de tête, et le module (250, 350, 450) d'air de pied.

11. Procédé selon la revendication 10, comportant l'étape consistant à :
diriger, par le mécanisme de distribution de débit d'air, une première partie de l'air entrant dans l'espace via l'entrée d'air de façon à quitter le boîtier via le module d'air de vitre et une deuxième partie de l'air entrant dans l'espace via l'entrée d'air de façon à quitter le boîtier via le module d'air de pied suivant une orientation du mécanisme de distribution de débit d'air.

12. Procédé selon la revendication 10, comportant l'étape consistant à :
diriger, par le mécanisme de distribution de débit d'air, une première partie de l'air entrant dans l'espace via l'entrée d'air de façon à quitter le boîtier via le module d'air de tête et une deuxième partie de l'air entrant dans l'espace via l'entrée d'air de façon à quitter le boîtier via le module d'air de pied suivant une orientation du mécanisme de distribution de débit d'air.
